# FASCICULE DE BREVET EUROPEEN

(11) **EP 2 691 352 B1**
(45) Date de publication et mention de la délivrance du brevet: **16.10.2019**
(21) Numéro de dépôt: 12715191.8
(22) Date de dépôt: 29.03.2012
(51) Int. Cl.: C04B 35/565, C04B 41/86, C04B 41/00, C04B 41/50, F23G 5/48, F23M 5/00, F27D 1/00, F27D 1/12

(54) **PRODUIT FRITTÉ VITRIFIÉ**
VERGLASTES SINTERPRODUKT
VITRIFIED SINTERED PRODUCT

(30) Priorité: 31.03.2011 FR 1152726
(43) Date de publication de la demande: 05.02.2014
(73) Titulaire: Saint-Gobain Centre de Recherches et d'Etudes Européen, 92400 Courbevoie (FR)
(72) Inventeur: HIS, Christian, 84300 Cavaillon (FR); CHAMPION, Thibault, F-84660 Maubec (FR)
(74) Mandataire: Nony
(86) Numéro de dépôt international: PCT/IB2012/051515
(87) Numéro de publication internationale: WO 2012/131614

(56) Documents cités:
- EP-A1- 0 469 271
- EP-A1- 1 728 774
- GB-A- 581 528
- GB-A- 632 093
- GB-A- 702 059
- GB-A- 716 836
- US-A- 2 544 060
- US-A1- 2004 219 315
- GUILLAUME DI VITA ET AL: "Oxidation Resistance of Coated and Uncoated SiC-Based Refractories", ADVANCES IN SCIENCE AND TECHNOLOGY,, vol. 65, 1 janvier 2010 (2010-01-01), pages 135-142, XP009152949,

## Description

### Domaine technique

L'invention se rapporte à un produit comportant un support fritté revêtu d'une couche de protection vitrifiée, notamment sous la forme d'un bloc. L'invention se rapporte également à l'utilisation de ce produit pour fabriquer une tuile de protection, en particulier dans un incinérateur, et notamment pour la protection de tubes d'un échangeur de chaleur.

### Etat de la technique

Les produits à base de carbure de silicium (SiC) sont classiquement destinés à haute température et/ou dans des environnements où ils subissent des chocs thermiques répétés. Leur porosité les rend cependant sensibles à la corrosion. Une couche superficielle de protection, par exemple à base de silice, permet d'augmenter la résistance à la corrosion, comme décrit dans US 2005/0008878.

L'article « The Use of Si3N4 SiC refractory shapes by reverse reaction sintering in Al réduction cells » - Sun et Al., Light metal age, February 2007, p44-45, décrit la possibilité de fabriquer un support SiC-nitrure à partir d'une charge de départ comportant des grains de Si₃N₄, mise en forme, puis frittage dans des conditions oxydantes. Il évoque la protection du support par une couche de protection.

Lors de l'utilisation, la couche de protection peut cependant se dégrader, réduisant ainsi la durée de vie du produit.

Il existe donc un besoin pour un produit à base de carbure de silicium présentant une durée de vie augmentée.

Un but de l'invention est de satisfaire ce besoin.

Les documents GB716,836 et GB581,528 décrivent des articles réfractaires à base de carbure de silicium comprenant du manganèse menant à la formation d'une couche vitreuse en surface.

Le document US2004/0219315 A1 décrit un article céramique incluant un corps céramique contenant du carbure de silicium présentant une couche vitreuse formée par l'oxydation du corps céramique en présence d'alumine submicronique.

### Résumé de l'invention

L'invention propose un produit comportant
- un support fritté constitué d'un « granulat » constitué des particules présentant une taille supérieure à 100 µm, le complément dudit support étant la « matrice », et
- une couche de protection recouvrant au moins partiellement la surface dudit support,

le granulat représentant plus de 60% et moins de 95% de la masse dudit support et étant constitué, pour plus de 80%, en masse, de grains de carbure de silicium,
la matrice comportant plus de 3%
- de phase SiAlON cristallisée, ou
- d'un mélange d'un composé de fer et de phase SiAlON cristallisée, le composé de fer pouvant en particulier être choisi parmi FeO, Fe, FeₜSi, avec t compris entre 0,5 et 5,6, Fe₂SiO₄, et leurs mélanges, la teneur en Si₃N₄ (qui est une phase SiAlON cristallisée) étant supérieure à celle dudit composé de fer,
en pourcentage massique sur la base de la masse de la matrice,
la matrice étant constituée, pour plus de 90% en masse,
- de SiO₂ et/ou
- dudit composé de fer, et/ou
- de SiC et/ou
- de phase SiAlON cristallisée, en particulier Si₃N₄-α et/ou Si₃N₄-β et/ou Si₂ON₂,.
la couche de protection étant constituée en un verre ou en une vitrocéramique, et présentant l'analyse chimique suivante, en pourcentage massique sur la base des oxydes :
- 45% ≤ SiO₂ ≤ 90% ;
- 1% ≤ manganèse exprimé sous la forme MnO ≤ 20%, voire MnO ≤ 15% ;
- 2% ≤ aluminium exprimé sous la forme Al₂O₃ ≤15% ;
- autres éléments, en dehors de l'oxygène, exprimés sous une forme oxyde: ≤ 25%,
produit dans lequel ladite phase SiAION cristallisée respecte l'une des formules suivantes :-SiₓAl_{y}OᵤNᵥ, dans laquelle :
- x est supérieur ou égal à 0, et inférieur ou égal à 1,
- y est supérieur ou égal à 0, et inférieur ou égal à 1,
- u est supérieur ou égal à 0, et inférieur ou égal à 1,
- v est supérieur à 0, et inférieur ou égal à 1,
- x+y > 0,
x, y, u et v étant des indices stoechiométriques et normalisés par rapport à celui qui est le plus élevé, rendu égal à 1;
- MeₓSi₁₂₋₍ₘ₊ₙ₎Al₍ₘ₊ₙ₎OₙN₁₆₋ₙ, avec 0 ≤ x ≤ 2, Me un cation choisi parmi les cations de lanthanides, Fe, Y, Ca, Li et leurs mélanges, 0 ≤ m ≤ 12, 0 ≤ n ≤ 12 et n+m ≤ 12.

Les inventeurs ont découvert qu'un tel produit présente une longue durée de vie. Sans être liés par la théorie, ils expliquent ces performances par un bon accord dilatométrique avec le support. Ils pensent que la présence de manganèse serait particulièrement déterminante.

Les inventeurs ont également découvert que la couche de protection améliore particulièrement la résistance à la corrosion par les gaz, en particulier par la vapeur d'eau, par les sulfures et par les chlorures. Un produit selon l'invention est donc bien adapté à une utilisation dans une application dans laquelle il est soumis à de tels gaz. Par souci de clarté, on appelle ci-après « support selon l'invention » et « couche de protection selon l'invention », un support et une couche de protection d'un produit selon l'invention.

La matrice peut notamment résulter de l'ajout, dans la charge de départ, d'un mélange classiquement désigné par « FeSi₃N₄ » et appelé « ferro-nitrure de silicium » ou encore « nitrure de ferro-silicium ». Un tel mélange comporte classiquement, pour un total de 100%, plus de 50% en masse de Si₃N₄, moins de 10% de silicium métallique, le complément étant constitué d'un composé de fer, en particulier choisi parmi FeO, Fe, FeₜSi, avec t compris entre 0,5 et 5,6, Fe₂SiO₄, et leurs mélanges. Le composé de fer et la phase Si₃N₄ sont classiquement présents simultanément dans la majorité des particules d'un tel mélange.

Par exemple, la société Rio Tinto Alcan commercialise une poudre de ferro-nitrure de silicium appelée Nitrosil 20.

Par extension, on appelle également ferro-nitrure de silicium, ou « FeSi₃N₄ », les constituants de la matrice résultant de l'ajout d'une poudre de ferro-nitrure de silicium dans la charge de départ.

Dans un mode de réalisation, la matrice est obtenue par frittage d'une charge de départ comportant plus de 3% de ferro-nitrure de silicium, en pourcentage massique sur la base de la matière minérale sèche.

De préférence, **un support** selon l'invention présente une ou plusieurs des caractéristiques optionnelles suivantes :
- Le granulat représente plus de 70% et/ou moins de 95%, moins de 90% de la masse du support ;
- Les grains de carbure de silicium représentent plus de 90%, de préférence plus de 95%, de préférence sensiblement 100 % de la masse du granulat ;
- L'ensemble des grains de carbure de silicium et des grains présentant une teneur en alumine supérieure ou égale à 50%, de préférence supérieure à 60%, de préférence supérieure à 70%, représente plus de 95%, voire sensiblement 100% de la masse du granulat. De préférence, lesdits grains comportant de l'alumine sont des grains de corindon, de préférence le corindon brun, de bauxite, de sillimanite, en particulier d'andalousite.
- La taille des grains de carbure de silicium, voire des grains de granulat, est inférieure à 10 mm, de préférence inférieure à 5 mm ;
- La matrice est constituée, pour plus de 95%, pour plus de 97%, pour plus de 99%, voire sensiblement 100% en masse, des éléments silicium (Si) et/ou oxygène (O) et/ou azote (N) et/ou aluminium (Al) et/ou fer (Fe) et/ou carbone (C) et/ou bore (B) et/ou manganèse (Mn), ces éléments pouvant êtres combinés, par exemple sous forme SiC ;
- La matrice comporte de préférence plus de 4%, de préférence plus de 8% et/ou moins de 60%, voire moins de 40%, voire moins de 32%, voire moins de 28%, dudit mélange d'un composé de fer et de phase SiAlON cristallisée, en pourcentage massique sur la base de la masse de la matrice ;
- La matrice comporte de préférence plus de 2%, plus de 4%, de préférence plus de 8% et/ou moins de 60%, voire moins de 40%, voire moins de 32%, voire moins de 28%, ou moins de 14% dudit composé de fer, en pourcentage massique sur la base de la masse de la matrice ;
- La matrice comporte de préférence plus de 4%, de préférence plus de 8% et/ou moins de 60%, voire moins de 40%, voire moins de 32%, voire moins de 28%, de phase SiAlON cristallisée, en pourcentage massique sur la base de la masse de la matrice ;
- La matrice est constituée, pour plus de 95%, voire sensiblement 100% en masse,
   - de SiO₂ et/ou
   - d'une phase SiAlON cristallisée et/ou
   - dudit composé de fer et de Si₃N₄, la teneur en composé de fer étant inférieure à celle en Si₃N₄ et/ou
   - de SiC ;
- La matrice est constituée, pour plus de 95%, voire sensiblement 100% en masse, de FeSi₃N₄;
- Ladite phase SiAlON cristallisée respecte l'une des formules suivantes :
   - SiₓAl_{y}OᵤNᵥ, dans laquelle :
      - x est supérieur à 0,05, supérieur à 0,1 ou supérieur à 0,2, et inférieur ou égal à 0,8 ou inférieur ou égal à 0,4,
      - y est supérieur à 0,1, supérieur à 0,3 ou supérieur à 0,5,
      - u est supérieur à 0,1 ou supérieur à 0,2, et inférieur ou égal à 0,7,
      - v est supérieur à 0,1, supérieur à 0,2 ou supérieur à 0,5, ou supérieur à 0,7,
      - x+y > 0,
   x, y, u et v étant des indices stoechiométriques et normalisés par rapport à celui qui est le plus élevé, rendu égal à 1.
- Les phases SiAlON cristallisées de la matrice contiennent des phases AlN et/ou un de ses polytypes, notamment 2H, 8H, 12H, 15R, 21R, et 27R, de formule Si_{x'}Al_{y'}O_{u'}N_{v'}, dans laquelle les indices stoechiométriques x', y', u' et v', normalisés par rapport à l'indice le plus élevé rendu égal à 1, sont tels que 0 ≤ x' ≤ 0,37 et 0,60 ≤ y' ≤ 1 et 0 ≤ u' ≤ 0,71 et 0,76 ≤ v' ≤ 1 ;
- Les phases SiAlON cristallisées de la matrice contiennent des phases de formule Si_{x"}Al_{y"}O_{u"}N_{v"}, dans laquelle les indices stoechiométriques x", y", u" et v", normalisés par rapport à l'indice le plus élevé rendu égal à 1, sont tels que 0,43 ≤ x" ≤ 0,75 et 0 ≤ y" ≤ 1 et 0 ≤ u" ≤ 1 et 0,9 ≤ v" ≤ 1, dites « SiAlON-β' ». Les phases cristallisées « SiAlON-β' » peuvent encore s'exprimer avec la formule Si_{6-z}Al_{z}O_{z}N_{8-z}, dans laquelle l'indice z est un indice stoechiométrique tel que 0 ≤z< 4,2 ;
- Les phases SiAION cristallisées de la matrice contiennent des phases de formule Si_{x"'}Al_{y"'}O_{u"'}N_{v'"}, dans laquelle les indices stoechiométriques x'", y'", u'" et v"', normalisés par rapport à l'indice le plus élevé rendu égal à 1, sont tels que x'" = 1 et 0 ≤ y'" ≤ 0,11 et 0,5 ≤ u'" ≤ 0,67 et v" = 1, dites « SiAlON-O' ». Les phases cristallisées « SiAlON-O' » peuvent encore s'exprimer avec la formule Si_{2-z'}Al_{z'}O_{1+z'}N_{2-z'}, dans laquelle l'indice z' est un indice stoechiométrique tel que 0 ≤z< 0,2 ;
- La matrice contient SiO₂ ;
- La matrice contient Si₃N₄, de préférence en une teneur supérieure à 4%, de préférence supérieure à 8% et/ou inférieure à 60%, de préférence inférieure à 40%, de préférence inférieure à 32%, de préférence inférieure à 28%, en pourcentage massique sur la base de masse de la matrice ;
- La matrice contient Si₂ON₂, de préférence en une teneur supérieure à 4%, de préférence supérieure à 8% et/ou inférieure à 28%, de préférence inférieure à 20%, en pourcentage massique sur la base de la masse de la matrice ;
- La matrice contient SiO₂, SiC et au moins une phase SiAlON cristallisée choisie parmi Si₃N₄-α, Si₃N₄-β, Si₂ON₂ et leurs mélanges ; En particulier, la teneur massique totale (SiO₂+Si₃N₄+Si₂ON₂+SiC+éventuellement d'autres phases SiAlON cristallisées), dans la matrice, est supérieure à 95% ;
- Dans la matrice, le Si₃N₄ éventuellement présent ne résulte pas d'un frittage réactif ;
- Dans le support, la teneur massique en carbure de silicium, mesurée par diffraction aux rayons X, est supérieure à 70%, de préférence supérieure à 80%, et/ou inférieure à 95% ;
- Dans le support, la teneur massique en nitrure de silicium Si₃N₄ sous forme bêta, mesurée par diffraction aux rayons X, est supérieure à 1%, de préférence supérieure à 4% et/ou inférieure à 15%, de préférence inférieure à 10%, de préférence inférieure à 8%, de préférence inférieure à 7% ;
- Dans le support, la teneur massique en Si₂ON₂, mesurée par diffraction aux rayons X, est supérieure à 1%, de préférence supérieure à 2% et/ou inférieure à 7%, de préférence inférieure à 5% ;
- Dans le support, la teneur en phases cristallines autres que SiC, Si₃N₄ sous forme bêta et Si₂ON₂ est inférieure à 6% ;
- Le support présente la forme d'un bloc, de préférence la forme d'une tuile.

Une **couche de protection** selon l'invention peut notamment présenter une ou plusieurs des caractéristiques optionnelles suivantes :
- La couche de protection présente une épaisseur moyenne supérieure à 10µm, supérieure à 20µm, de préférence supérieure à 30 µm et/ou inférieure à 300 µm, de préférence inférieure à 200 µm, de préférence inférieure à 100 µm, de préférence encore inférieure à 60 µm ;
- La couche de protection recouvre plus de 25%, plus de 50%, plus de 75%, plus de 80%, plus de 90%, plus de 95%, voire pour plus de 99%, de préférence sensiblement 100% de la surface du support ;
- La teneur en SiO₂ de la couche de protection est supérieure à 50%, de préférence supérieure à 60%, de préférence supérieure à 65%, voire supérieure à 70% et/ou inférieure à 85%, de préférence inférieure à 80%, de préférence inférieure à 75% ;
- La teneur en manganèse de la couche de protection, exprimée sous la forme MnO, est supérieure à 2%, de préférence supérieure à 3%, de préférence supérieure à 5% et/ou inférieure à 15%, de préférence inférieure à 10% ; Dans un mode de réalisation, la teneur en manganèse de la couche de protection, exprimée sous la forme MnO, est supérieure à 3% et inférieure à 12% ;
- La teneur en aluminium de la couche de protection, exprimée sous la forme Al₂O₃, est supérieure à 3% et/ou inférieure à 10%, de préférence inférieure à 7% ;
- De préférence, les « autres éléments » de la couche de protection comportent un ou plusieurs éléments parmi le bore, le fer, le magnésium, le titane, le potassium, le sodium et le calcium ;
- De préférence, la teneur en bore dans la couche de protection, exprimée sous la forme B₂O₃, est supérieure à 0,1%, de préférence supérieure à 0,2%, voire supérieure à 0,5%, voire supérieure à 1% et/ou inférieure à 10%, voire inférieure à 5% ;
- De préférence, la teneur en fer dans la couche de protection, exprimée sous la forme Fe₂O₃, est supérieure à 1%, de préférence supérieure à 2%, de préférence supérieure à 4% et/ou inférieure à 20%, de préférence inférieure à 15%, de préférence inférieure à 10%, de préférence inférieure à 8% ;
- De préférence, la couche de protection comporte du bore et du fer ;
- De préférence, la teneur en magnésium dans la couche de protection, exprimée sous la forme MgO, est comprise entre 5% et 15% ;
- De préférence, la teneur en titane dans la couche de protection, exprimée sous la forme TiO₂, est inférieure à 1% ;
- De préférence, la teneur en potassium dans la couche de protection, exprimée sous la forme K₂O, est inférieure à 5%, de préférence inférieure à 4% ;
- De préférence, la teneur en sodium dans la couche de protection, exprimée sous la forme Na₂O, est inférieure à 4%, de préférence inférieure à 2% ;
- De préférence, la teneur en calcium dans la couche de protection, exprimée sous la forme CaO, est inférieure à 4%, de préférence inférieure à 2% ;
- De préférence, les éléments autres que le silicium, l'oxygène, le manganèse, l'aluminium, le bore, le fer, le magnésium, le titane, le potassium, le sodium et le calcium sont des impuretés et leur teneur totale, exprimée sous une forme oxyde est inférieure à 5%, de préférence inférieure à 4%, de préférence inférieure à 3%, voire inférieure à 2%, voire inférieure à 1% ;
- De préférence, la couche de protection est constituée pour plus de 90%, plus de 95%, plus de 98%, voire sensiblement 100% de constituants oxydes, en pourcentage massique sur la base des oxydes ;
- La couche de protection est en une vitrocéramique qui présente des cristallisations contenant les éléments aluminium et/ou potassium et/ou magnésium et/ou calcium et/ou fer et/ou manganèse et/ou silicium et/ou titane et/ou oxygène ;
- La couche de protection est en une vitrocéramique qui contient des cristallisations de cristobalite et/ou de fayallite Fe₂SiO₄ et/ou de cordiérite et/ou de mullite.

L'invention concerne aussi un **procédé de fabrication** d'un produit selon l'invention comportant les étapes suivantes :
a) fabrication d'une préforme adaptée à la fabrication, par traitement thermique, d'un support selon l'invention ;
b) optionnellement, application, à la surface de ladite préforme, d'un revêtement adapté à la fabrication, par le frittage de l'étape c), d'une couche de protection selon l'invention ;
c) frittage de la préforme, optionnellement revêtue, de préférence sous atmosphère contenant de l'oxygène lorsque ledit procédé ne comporte ni d'étape b), ni d'étape d), à une température Ts comprise entre 1000 et 1700°C, la température étant maintenue au-delà de 0,9.Ts pendant une durée supérieure à 0,5 heure, de manière à former une pièce frittée ;
d) optionnellement,
   d1) application, à la surface de ladite pièce frittée, d'un revêtement adapté à la fabrication, par le traitement thermique de l'étape d2), d'une couche de protection selon l'invention ; et
   d2) traitement thermique à une température Ts' comprise entre 700°C et Ts-100°C, la température étant maintenue au-delà de 0,9.Ts' pendant une durée supérieure à 0,5 heure.

Suivant un premier mode de réalisation, la fraction matricielle de la préforme, ou la fraction matricielle du mélange particulaire utilisé pour la fabriquer, comporte
- des particules de nitrure de silicium, dans une quantité, en pourcentage massique sur la base de la masse de la fraction matricielle, supérieure à 20%, de préférence supérieure à 30% et/ou inférieure à 60%, de préférence inférieure à 50%, et/ou
   un mélange de particules dudit composé de fer et/ou de particules de Si₃N₄ et/ou de particules dudit composé de fer et de Si₃N₄, la teneur en composé de fer étant inférieure à celle en Si₃N₄, la quantité de mélange, en pourcentage massique sur la base de la masse de la fraction matricielle, étant supérieure à 20%, de préférence supérieure à 30% et/ou inférieure à 60%, de préférence inférieure à 50%, un tel mélange pouvant notamment résulter de l'ajout de ferro-nitrure de silicium dans la charge de départ,
- de la silice et/ou un précurseur de silice, dans une quantité, en pourcentage massique sur la base de la masse de la fraction matricielle, supérieure à 40%, de préférence supérieure à 50% et/ou inférieure à 80%, de préférence inférieure à 70%
- du manganèse et/ou un précurseur de manganèse, dans une quantité, en pourcentage massique sur la base de la masse de la fraction matricielle, supérieure à 0,5%, de préférence supérieure à 1% et/ou inférieure à 10%, de préférence inférieure à 5%,
- de l'aluminium et/ou un précurseur d'aluminium, dans une quantité, en pourcentage massique sur la base de la masse de la fraction matricielle, supérieure à 0,5%, de préférence supérieure à 1% et/ou inférieure à 15%, de préférence inférieure à 10%, de préférence inférieure à 5%,
- optionnellement du bore et/ou un précurseur de bore, dans une quantité, en pourcentage massique sur la base de la masse de la fraction matricielle, supérieure à 0,5%, de préférence supérieure à 1% et/ou inférieure à 10%, de préférence inférieure à 5%,
- optionnellement du fer et/ou un précurseur de fer, dans une quantité, en pourcentage massique sur la base de la masse de la fraction matricielle, supérieure à 0,5%, de préférence supérieure à 1% et/ou inférieure à 15%, de préférence inférieure à 10%, de préférence inférieure à 5%.

Suivant ce premier mode de réalisation, la couche de protection se forme en même temps que la préforme se transforme en un support fritté. Avantageusement, les étapes b) et d) sont donc optionnelles et un produit selon l'invention peut ainsi être fabriqué rapidement, économiquement et avec des rendements de fabrication élevés.

Suivant un deuxième mode de réalisation, on effectue une étape b) et l'étape d) n'est pas nécessaire à l'obtention d'un produit selon l'invention. En outre, à la différence du premier mode de réalisation, la préforme n'a pas besoin de contenir
- de la silice et/ou un précurseur de silice,
- du manganèse et/ou un précurseur de manganèse,
- de l'aluminium et/ou un précurseur d'aluminium.

Suivant un troisième mode de réalisation, on effectue une étape d) et l'étape b) n'est pas nécessaire à l'obtention d'un produit selon l'invention. En outre, à la différence du premier mode de réalisation et comme le deuxième mode de réalisation, la préforme n'a pas besoin de contenir
- de la silice et/ou un précurseur de silice,
- du manganèse et/ou un précurseur de manganèse,
- de l'aluminium et/ou un précurseur d'aluminium.

Dans un mode de réalisation particulier, le traitement thermique à l'étape d) est réalisé lorsque le support est en position de service, lors de la première montée en température.

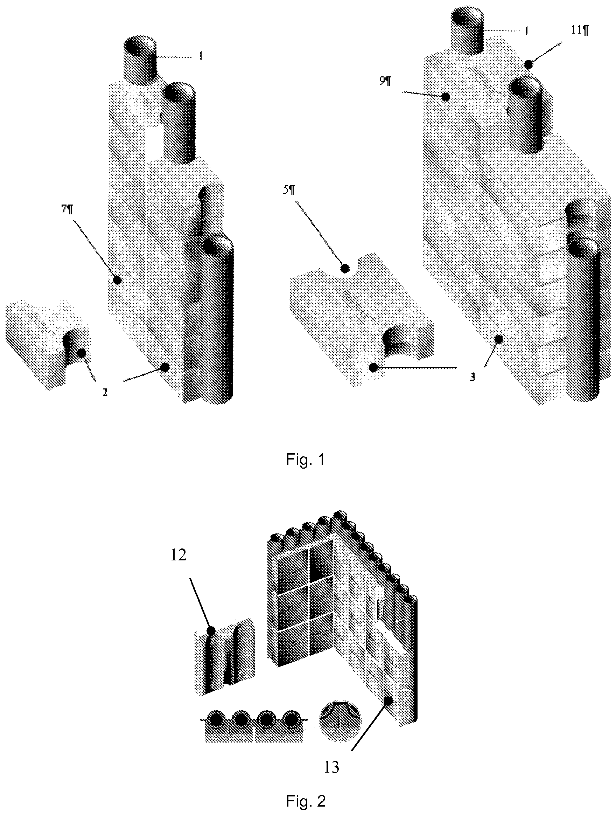

L'invention concerne notamment une pièce choisie parmi un élément de protection de tubes d'un incinérateur, en particulier une tuile d'incinérateur (comme représentée sur la figure 2), et une brique, en particulier une brique présentant une ou plusieurs parties concaves, en particulier présentant la forme d'un « H » ou d'un « U », le profil des parties concaves étant de préférence en forme d'arc de cercle, de préférence encore demi-circulaires (comme représenté sur la figure 1), ladite pièce comportant un produit selon l'invention.

L'invention concerne également une paroi comportant un tube et au moins une pièce selon l'invention présentant une partie concave dont le profil est de forme complémentaire audit tube, le tube étant logé dans ladite partie concave. De préférence, le tube est protégé par un ensemble de pièces selon l'invention constituant un bouclier de protection. De telles pièces sont classiquement appelées « belly bricks » en anglais.

De préférence, la couche de protection recouvre plus de 75%, plus de 80%, plus de 90%, plus de 95%, voire pour plus de 99%, de préférence sensiblement 100% de la surface de la pièce exposée aux gaz chauds.

### Définitions

- Par « poudre », on entend un mélange de particules sec.
- Par « bloc » on entend un objet solide qui n'est pas une particule.
- Par « particule », on entend un objet solide dont la taille est inférieure à 10 mm.

On distingue en particulier les particules présentant une taille supérieure à 100 µm, appelées « grains », et celles présentant une taille inférieure ou égale à 100 µm, appelées « particules fines » ou « particules matricielles ». L'ensemble des grains constitue le « granulat ». L'ensemble des particules matricielles constitue la « fraction matricielle ».
- Par extension, on appelle également « granulat » et «fraction matricielle » les grains et les particules matricielles après qu'elles ont été solidarisées sous la forme d'une préforme.
- On appelle « taille » d'une particule le diamètre de la sphère de même volume. La taille des particules d'une poudre est évaluée classiquement par une caractérisation de distribution granulométrique réalisée avec un granulomètre laser. Le granulomètre laser peut être, par exemple, un Partica LA-950 de la société HORIBA.
- Les percentiles ou « centiles » 10 (D₁₀), 50 (D₅₀), 90 (D₉₀) et 99,5 (D_{99,5}) d'une poudre sont les tailles de particules correspondant aux pourcentages, en masse, de 10 %, 50 %, 90 % et 99,5 % respectivement, sur la courbe de distribution granulométrique cumulée des particules de la poudre, les tailles de particules étant classées par ordre croissant. Par exemple, 10 %, en masse, des particules de la poudre ont une taille inférieure à D₁₀ et 90 % des particules en masse ont une taille supérieure à D₁₀. Les percentiles peuvent être déterminés à l'aide d'une distribution granulométrique réalisée à l'aide d'un granulomètre laser.
- On appelle «taille minimale d'une poudre », le percentile 10 (D₁₀) de ladite poudre.
- On appelle « taille maximale » le percentile 99,5 (D_{99,5}) de ladite poudre.
- On appelle « taille médiane » le percentile D₅₀, c'est-à-dire la taille divisant les particules en première et deuxième populations égales en masse, ces première et deuxième populations ne comportant que des particules présentant une taille supérieure, ou inférieure respectivement, à la taille médiane.
- On appelle « frittage » un traitement thermique par lequel une préforme se transforme en une pièce présentant une microstructure constituée d'un granulat dont les grains sont solidarisés au moyen d'une matrice.

Dans un produit selon l'invention, la phase SiAlON cristallisée peut notamment être obtenue par frittage sous atmosphère non azotée si de l'azote est apporté par au moins un des constituants de la charge de départ ou par frittage sous azote, de préférence à une température comprise entre 1300 et 1600°C, ce dernier type de procédé, permettant un frittage réactif sous azote, étant bien connu de l'homme du métier.

Par « frittage sous azote », on entend un frittage dans un environnement gazeux comportant plus de 90%, de préférence plus de 95% ou, de préférence encore, sensiblement 100% d'azote, en pourcentage volumique. Un tel environnement gazeux est appelé « environnement azoté ».

Pendant un frittage réactif sous azote, l'azote de l'environnement réagit avec certains des constituants de la préforme, en particulier avec l'alumine calcinée, la silice sous forme micronique et les poudres métalliques, pour former une matrice et ainsi lier les grains du granulat. Cette réaction est appelée « nitruration ».

Une matrice obtenue par frittage réactif présente des particularités. Notamment, lors du frittage réactif, il se produit une nitruration des métaux précurseurs des phases cristallisées azotées. L'augmentation de volume qui en résulte, typiquement de 1 à 30%, permet avantageusement de combler les pores de la matrice et/ou de compenser le retrait occasionné par le frittage des grains. Le frittage réactif permet ainsi d'améliorer la résistance mécanique du produit fritté. Les produits frittés réactivement présentent ainsi une porosité ouverte et/ou fermée significativement plus faible que celle(s) des autres produits frittés dans des conditions de température et de pression similaires. A la cuisson, les produits frittés réactivement ne présentent sensiblement pas de retrait.

Une matrice obtenue par frittage réactif peut cependant comprendre des particules ajoutées dans la charge de départ et n'ayant pas réagi pendant le frittage. Par exemple une observation au microscope à balayage et des techniques de type EDS ou EDX ou de microdiffraction X montrent que la matrice d'un produit comportant un granulat de carbure de silicium comporte généralement des particules de carbure de silicium.
- Par « matériau réfractaire », on entend un matériau présentant un point de fusion ou de dissociation supérieur à 1000°C.
- Par « vitrocéramique », on entend un composé microcristallin obtenu par cristallisation d'un verre précurseur. Les vitrocéramiques sont composées de très fines cristallisations (microcristallisations), de taille moyenne inférieure à 1µm, baignant dans une phase vitreuse résiduelle. Les quantités de phase vitreuse et de microcristallisations ne limitent pas l'invention.

Les produits fabriqués par fusion-refroidissement qui, au cours de leur fabrication, ne transitent pas par une étape dans laquelle ils sont à l'état de verre ne sont donc pas des vitrocéramiques. Le corindon fondu, l'alumine fondue, les spinelles fondus, la magnésie fondue, la mullite fondue, la mullite-zircone fondue, le titanate d'aluminium fondu, éventuellement dopé, et les nitrures fondus ne sont pas, en particulier, des vitrocéramiques.
- Par « impuretés», on entend les constituants inévitables, introduits involontairement et nécessairement avec les matières premières ou résultant de réactions avec ces constituants. Les impuretés ne sont pas des constituants nécessaires, mais seulement tolérés. De préférence la quantité des impuretés est inférieure à 2%, inférieure à 1%, inférieure à 0,5%, voire sensiblement nulle.
- Par « silice » ou « SiO₂ », on entend toutes les formes cristallographiques de la silice, comme le quartz, la cristobalite, la tridymite, et également la silice amorphe.
- La couche de protection peut comporter des constituants oxydes, mais aussi des constituants non oxydes, par exemple des inclusions métalliques. Pour déterminer la composition de la couche de protection, on exprime la teneur de ces constituants non oxydes sous forme oxyde. Par exemple on considère que la présence d'une mole de Mn correspond à une mole de MnO. Un pourcentage massique, dit « sur la base des oxydes », est mesuré en rapportant la teneur massique du constituant considéré, éventuellement exprimé sous forme oxyde, à la masse totale de l'ensemble des constituants oxydes et des constituants non oxydes exprimés sous forme oxydes (à l'exception du carbone). Ainsi, la « teneur en Mn exprimée sous forme MnO » est égale à la teneur massique en Mn multipliée par 1,29 (correspondant à la teneur massique en MnO correspondante) divisée par la somme des teneurs en constituants oxydes et en constituants non oxydes exprimées sous forme oxyde. Les appareils classiquement utilisés pour déterminer ces compositions (microsonde) effectuent automatiquement des mesures « sur la base des oxydes », en convertissant les teneurs des constituants non oxydes en teneurs oxydes équivalentes.
- On appelle « lanthanides » les éléments chimiques de numéro atomique compris entre 57 (lanthane) et 71 (lutécium), le lanthane et le lutécium étant compris dans lesdits lanthanides.
- Classiquement, « Si₃N₄ » désigne toutes les formes de Si₃N₄ (à savoir Si₃N₄-α et Si₃N₄-β).
- Par « temporaire », on entend « éliminé du produit pendant le traitement thermique de consolidation ».
- Par « précurseur » d'un composé ou d'un élément, on entend un constituant apte à fournir ledit composé, respectivement ledit élément, lors de la mise en oeuvre d'un procédé de fabrication selon l'invention. Par exemple, le carbure de bore B₄C est un précurseur possible de bore. De même, une argile est un précurseur possible de silice, MnCO₃ est un précurseur possible du manganèse et le ferro-nitrure de silicium est un précurseur possible de fer.

Sauf indication contraire, toutes les teneurs en oxydes des produits selon l'invention sont des pourcentages massiques exprimés sur la base des oxydes.

Par « contenant un », « comprenant un » ou « comportant un », on entend « comportant au moins un », sauf indication contraire.

### Brève description des figures

D'autres caractéristiques et avantages de l'invention apparaîtront encore à la lecture de la description détaillée qui va suivre et à l'examen du dessin annexé dans lequel les figures 1 et 2 représentent schématiquement des exemples de parois de tubes selon l'invention.

### Description détaillée

Un produit selon l'invention peut être fabriqué suivant les étapes a) à d) ci-dessus.

**A l'étape a),** la préforme peut être fabriquée suivant les procédés conventionnels, par
a1) préparation d'une charge de départ ;
a2) mise en forme de ladite charge de départ de manière à former une préforme ;
a3) séchage optionnel de la préforme, de préférence sous air ou atmosphère contrôlée en humidité.

**A l'étape a1),** la charge de départ comporte classiquement :
- un mélange particulaire constitué de
   - un granulat,
   - une fraction matricielle,
- optionnellement, un liant.

La nature et les quantités de matières premières sont déterminées de manière à ce que le produit fritté fabriqué soit conforme à l'invention.

La façon de déterminer les proportions des constituants de la charge de départ est parfaitement connue de l'homme du métier. Par exemple, l'homme du métier sait que le carbure de silicium présent dans la charge de départ se retrouve dans le produit fritté. Il sait également déterminer quels constituants vont se transformer pour constituer la matrice en cas de frittage réactif.

### Granulat

Le granulat représente plus de 60%, plus de 70% et moins de 95%, moins de 90% de la masse du mélange particulaire. Les grains de carbure de silicium représentent plus de 80%, de préférence plus de 90%, de préférence plus de 95%, de préférence sensiblement 100 % de la masse du granulat. Le complément à 100% du granulat est de préférence constitué de grains réfractaires, de préférence de grains présentant une teneur en alumine supérieure ou égale à 50%, de préférence supérieure à 60%, de préférence supérieure à 70%, représente plus de 95%, voire sensiblement 100% de la masse du granulat. De préférence, lesdits grains comportant de l'alumine sont des grains de corindon, de préférence le corindon brun, de bauxite, ou de sillimanite, en particulier d'andalousite.

La taille des grains est de préférence inférieure à 10 mm, de préférence inférieure à 5 mm.

Le mélange particulaire est de préférence fabriqué en mélangeant, en pourcentage en masse et pour un total de 100%,
- de 40 à 90 % d'une poudre réfractaire dont au moins 90% des particules ont une taille comprise entre 50 µm et 5 mm et
- de 10 à 60% d'au moins une poudre réfractaire dont au moins 90% des particules ont une taille inférieure à 200 µm.

Avantageusement, cette distribution granulométrique confère une cohésion optimale au support fritté.

Notamment pour la fabrication de pièces ou de briques, il est préférable qu'au moins 50%, voire au moins 60% ou au moins 70% en masse, des grains de granulat présentent une taille supérieure à 0,2 mm et/ou au moins 10%, voire au moins 20% des grains présentent une taille supérieure à 1 mm, voire supérieure à 1,5 mm, et/ou au moins 90%, voire au moins 95% en masse des grains de granulat présentent une taille inférieure à 10 mm, voire inférieure à 5 mm, voire inférieure à 3 mm.

### Fraction matricielle

La fraction matricielle peut notamment comporter :
- des particules de nitrure de silicium et/ou
- un mélange de particules dudit composé de fer et/ou de particules de Si₃N₄ et/ou de particules dudit composé de fer et de Si₃N₄, la teneur en composé de fer étant inférieure à celle en Si₃N₄, un tel mélange pouvant résulter de l'ajout de ferro-nitrure de silicium,
- optionnellement de la silice et/ou un précurseur de silice,
- de l'aluminium et/ou un précurseur d'aluminium,
- du manganèse et/ou un précurseur de manganèse,
- optionnellement du bore ou un précurseur de bore,
- optionnellement du fer et/ou un précurseur de fer.

La présence de particules de nitrure de silicium conduit à la création d'une phase de SiO₂ et/ou d'une phase SiAlON cristallisée, en particulier de Si₃N₄-α et/ou de Si₃N₄-β et/ou de Si₂ON₂ dans la matrice du produit fritté, sans avoir besoin d'un frittage réactif.

Le procédé en est avantageusement simplifié techniquement, et rendu plus économique. Ce procédé permet en outre de fabriquer les produits selon l'invention avec des rendements de fabrication élevés.

Lorsque la charge de départ contient de la silice et/ou un précurseur de silice, de l'aluminium et/ou un précurseur d'aluminium, et du manganèse et/ou un précurseur de manganèse, dans des quantités adaptées, une couche de protection peut être obtenue par frittage d'une préforme obtenue à partir de ladite charge de départ, comme décrit ci-après. Avantageusement, le procédé de fabrication en est simplifié, les étapes b) et d) n'étant pas nécessaires, et, de préférence, n'étant pas exécutées.

La silice et/ou le précurseur de silice sont de préférence amenés par une matière première choisie dans le groupe formé par la silice, en particulier les fumées de silice, les verres de silice, les argiles, les feldspaths, la bentonite, le carbure de silicium et leurs mélanges, de préférence dans le groupe formé par les argiles, les feldspaths, la bentonite, le carbure de silicium et leurs mélanges.

Le manganèse et/ou le précurseur de manganèse sont de préférence amenés par une matière première choisie dans le groupe formé par les oxydes de manganèse, les carbonates de manganèse et leurs mélanges. De préférence le manganèse est amené par une poudre de MnCO₃.

L'aluminium et/ou le précurseur d'aluminium sont de préférence amenés par une matière première choisie dans le groupe formé par les argiles, la bentonite, l'alumine, dont le corindon brun et le corindon blanc, la boehmite, les feldspaths, les hématites, les olivines, las bauxites, les andalousites, les kaolins, l'aluminium métal, les alliages d'aluminium, comme par exemple AlSi. De préférence, l'aluminium et/ou le précurseur d'aluminium sont amenés par une argile.

Le fer et/ou le précurseur de fer, optionnels, sont de préférence amenés par une matière première choisie dans le groupe formé par les argiles ferrugineuses, les feldspaths ferrugineux, les ferro-nitrures de silicium, la bauxite, les oxydes de fer, les illménites, les basaltes et leurs mélanges, de préférence choisie dans le groupe formé par les argiles ferrugineuses, les feldspaths ferrugineux, les ferro-nitrures de silicium, de préférence dans le groupe formé par les argiles ferrugineuses et les ferro-nitrures de silicium.

Le bore et/ou le précurseur de bore, optionnels, sont de préférence amenés par une matière première choisie dans le groupe formé par les oxydes, les carbures, les nitrures, les fluorures, les alliages métalliques contenant du bore, en particulier B₄C, CaB₆, H₃BO₃, les borates, et BN, de préférence dans le groupe formé par B₄C, H₃BO₃, et les borates de calcium, en particulier la colémanite. De préférence encore, le précurseur de bore est B₄C. Sans être tenu par une quelconque théorie, les inventeurs avancent l'hypothèse que B₄C va jouer le rôle d'antioxydant, qui au contact de l'air lors du frittage, va former B₂O₃. Cet oxyde migrerait avantageusement dans la phase vitrifiée en surface du support.

En particulier lorsqu'il est envisagé de fabriquer les phases azotées par frittage réactif, la charge de départ peut comporter du silicium métallique, présentant de préférence une taille médiane inférieure à 100 µm, de préférence inférieure à 50 µm, de préférence inférieure à 20 microns et/ou supérieure à 5 µm, voire supérieure à 10 microns, de préférence en une quantité supérieure à 5%, de préférence supérieure à 10%, et/ou inférieure à 30%, de préférence inférieure à 20%, en pourcentage massique sur la base de la matière minérale sèche de la charge de départ.

### Liant

La fonction du liant est de former avec le mélange particulaire une masse, dite « préforme », suffisamment rigide pour conserver sa forme jusqu'à l'étape de frittage.

Le choix du liant est dépendant de la forme souhaitée. Grâce au liant, la masse peut avantageusement prendre la forme d'une couche d'épaisseur variable, apte à suivre la paroi du moule, pour former des blocs.

Tout liant connu ou mélange de liants connus peut être utilisé. Les liants sont de préférence « temporaires », c'est-à-dire qu'ils sont éliminés en tout ou en partie lors des étapes de séchage optionnel et de frittage. De préférence encore, au moins un des liants temporaires est une solution de dérivés d'amidon modifié, une solution aqueuse de dextrine ou de dérivés de la lignone, une solution d'un agent de synthèse tel que l'alcool de polyvinyle, une résine phénolique ou une autre résine de type époxy, un alcool furfurylique, un stéarate de calcium ou un mélange de ceux-ci . De préférence encore, la quantité du liant temporaire est comprise entre 0,5 % et 7 % en masse par rapport à la masse du mélange particulaire.

La charge de départ est mélangée jusqu'à obtention d'une masse sensiblement homogène.

**A l'étape a2),** la charge est mise en forme de manière à former une préforme.

La charge de départ peut être coulée dans un moule conformé pour la fabrication d'un produit aux dimensions souhaitées.

La mise en forme peut comprendre un pressage, des additifs de pressage classiquement utilisés pour la fabrication de blocs frittés pouvant alors être ajoutés au mélange particulaire et au liant. Ces additifs comprennent des plastifiants, par exemple des amidons modifiés ou des polyéthylènes glycol, et des lubrifiants, par exemple des huiles solubles ou des dérivés de stéarates. Les quantités de ces additifs sont celles mises en oeuvre classiquement lors de la fabrication de blocs réfractaires frittés à base de carbure de silicium (SiC) à liaison nitrure de silicium (Si₃N₄).

La charge de départ peut subir une compression par application d'une force sur la surface supérieure de ladite charge de départ apte à la transformer en une préforme susceptible d'être frittée. Une pression spécifique de 300 à 600 Kg/cm² est appropriée. Le pressage est de préférence effectué de manière uniaxiale, par exemple au moyen d'une presse hydraulique. Il peut être avantageusement précédé d'une opération de damage manuel ou pneumatique et/ou de vibration.

D'autres procédés de mise en forme comme l'extrusion, le coulage, le vibrocoulage, le pilonnage, le damage, le pressage sous vibrations ou par les technologies combinant ces différentes techniques peuvent être utilisés lors de l'étape a2).

**A l'étape a3),** optionnelle, après démoulage éventuel, la préforme est mise à sécher. Le séchage est de préférence effectué à une température comprise entre 110 et 200°C. Il dure classiquement entre 10 heures et une semaine selon le format de la préforme, jusqu'à ce que l'humidité résiduelle de la préforme soit inférieure à 0,5 %. De préférence, le séchage est effectué dans une atmosphère contrôlée en humidité, conformément aux procédés de fabrication de préformes conventionnels.

La préforme démoulée présente avantageusement une résistance mécanique suffisante pour pouvoir être manipulée, transportée et éventuellement assemblée.

**A l'étape b),** optionnelle, on applique, à la surface de ladite préforme, un revêtement adapté à la fabrication, par le frittage de l'étape c), d'une couche de protection selon l'invention.

Le revêtement doit comporter :
- de la silice et/ou un précurseur de silice,
- du manganèse et/ou un précurseur de manganèse,
- de l'aluminium et/ou un précurseur d'aluminium.

Il peut également comporter, notamment :
- optionnellement, du bore ou un précurseur de bore,
- optionnellement, du fer et/ou un précurseur de fer.

Toute technique connue permettant de revêtir une pièce céramique est envisageable, en particulier les techniques d'émaillage, de pulvérisation humide, et de pulvérisation électrostatique.

Le revêtement est préparé par mélange des différentes matières premières, par exemple au tourne-jarre ou au broyeur à boulets, en voie aqueuse afin d'obtenir une barbotine homogène. A la fin de l'étape de mélange, la taille maximale des particules en suspension dans la barbotine est inférieure à 100 µm, voire inférieure à 80 µm, voire inférieure à 50 µm. La barbotine est ensuite soit pulvérisée à la surface de la pièce après pressage, soit appliquée en fond de moule comme décrit ci-après.

Dans un mode de réalisation avantageux, l'étape b) est réalisée simultanément à l'étape a2) de mise en forme. Par exemple du matériau de revêtement peut être disposé en fond de moule, recouvert de la charge de départ, puis co-pressé avec elle afin d'obtenir la préforme recouverte du revêtement. Une technique de poteyage peut également être utilisée.

De préférence, le revêtement appliqué sur la préforme est un émail.

**A l'étape c),** la préforme, optionnellement revêtue, est frittée. Les conditions de frittage conventionnelles mises en oeuvre pour le frittage des produits comportant un granulat représentant plus de 60% de leur masse et constitué, pour plus de 80%, en masse, de grains de carbure de silicium, peuvent être utilisées.

De préférence, le frittage est effectué sous une atmosphère oxydante, de préférence contenant de l'oxygène, de préférence sous une atmosphère contenant plus de 5% en volume d'oxygène, de préférence plus de 10% en volume d'oxygène, de préférence plus de 15% en volume d'oxygène, de préférence plus de 20% en volume d'oxygène, de préférence sous air.

De préférence, le débit d'air est supérieur à 0,5 l/h/m³ du volume de l'enceinte du four dans laquelle est disposée la préforme.

Dans un mode de réalisation, le frittage est un frittage réactif, de préférence effectué sous azote.

Les procédés permettant de fabriquer des phases SiAlON cristallisées, en particulier Si₃N₄-α et/ou de Si₃N₄-β et/ou de Si₂ON₂ par frittage réactif sont bien connus de l'homme du métier.

Un procédé qui ne comporte pas une étape d'application d'un revêtement à la surface de la préforme ou de la pièce frittée, c'est-à-dire qui ne comporte ni étape b), ni étape d) présente de préférence une étape de frittage dans une atmosphère oxydante, de préférence contenant de l'oxygène, de préférence dans une atmosphère contenant plus de 5% en volume d'oxygène, de préférence plus de 10% en volume d'oxygène, de préférence plus de 15% en volume d'oxygène, de préférence plus de 20% en volume d'oxygène, de préférence sous air.

Au palier de température, la température de cuisson Ts est de préférence supérieure à 1100°C, de préférence supérieure à 1200°C, de préférence supérieure à 1300°C, de préférence supérieure à 1400°C, et/ou inférieure à 1700°C, de préférence inférieure à 1600°C, voire inférieure à 1500°C.

La température de cuisson Ts dépend notamment de la nature et de la quantité de matériaux pouvant former des phases fusibles lors de l'élévation de température, appelés « fondants ». Si après cuisson à une température Ts, le produit ne présente pas une couche de protection alors que le mélange particulaire respecte les règles décrites ci-dessus, une augmentation de la température de cuisson Ts par incrément de 100°C peut être réalisée jusqu'à obtention de la couche de protection.

Le temps de cuisson à une température supérieure à 0,9.Ts est de préférence supérieur à 2 heures, de préférence supérieur à 5 heures, de préférence à 10 heures, voire supérieur à 15 heures et/ou de préférence inférieur à 24 heures.

La durée totale de la cuisson, généralement comprise entre 6 heures et 15 jours environ de froid à froid, est variable en fonction des matériaux mais aussi de la taille et la forme de la préforme. Une durée totale de cuisson de 6 heures peut être réalisée en four tunnel, par exemple à sole poussée.

Lorsque la préforme contient de l'aluminium, du manganèse, de la silice, et optionnellement du bore et du fer, et/ou des précurseurs de ces constituants, ces constituants vont réagir pendant le frittage et en partie exsuder pour former une couche de protection vitrifiée en surface de la pièce frittée.

Lorsqu'un revêtement a été appliqué à la surface de la préforme (étape b)), ce revêtement va également conduire à une couche de protection vitrifiée en surface de la pièce frittée.

Ces deux opérations pour fabriquer une couche de protection selon l'invention (par adaptation de la composition de la préforme et par application d'un revêtement sur la préforme) peuvent être combinées. De préférence cependant, un procédé selon l'invention ne comporte qu'une seule de ces opérations.

Les conditions de frittage ci-dessus conduisent simultanément au frittage de la préforme pour aboutir à un support selon l'invention, et à la transformation du revêtement pour aboutir à une couche de protection selon l'invention.

**A l'étape d),** on crée une couche de protection sur une pièce déjà frittée. Cette opération peut être combinée avec l'une ou les deux des opérations décrites ci-dessus pour fabriquer une couche de protection selon l'invention (par adaptation de la composition de la préforme et par application d'un revêtement sur la préforme). De préférence cependant, un procédé selon l'invention ne comporte qu'une seule de ces trois opérations.

A l'étape d1), on applique, à la surface de la pièce frittée, un revêtement adapté à la fabrication, par le traitement thermique de l'étape d2), d'une couche de protection selon l'invention.

La composition du revêtement et les techniques utilisées à cet effet peuvent être celles décrites ci-dessus pour l'étape b) (à l'exception du co-pressage, bien entendu)

A l'étape d2), le traitement thermique est effectué à une température Ts' comprise entre 700°C et Ts-100°C, de préférence supérieure à 800°C, de préférence supérieure à 900°C, de préférence supérieure à 1000°C, voire supérieure à 1100°C, et de préférence inférieure à Ts-150°C.

De préférence, le temps de traitement thermique à une température supérieure à 0,9.Ts' est de préférence supérieur à 1 heure, de préférence supérieur à 2 heures et/ou inférieur à 24 heures.

Le traitement thermique est effectué de préférence sous atmosphère d'oxygène.

Dans un mode de réalisation, la préforme peut être mise en place dans sa position de service sans avoir été frittée, et le frittage est effectué *in situ.*

### Application

Comme représenté sur les figures 1 et 2, un produit selon l'invention peut être utilisé pour fabriquer un bouclier de protection pour une paroi de tubes 1, en particulier une paroi de tubes d'un échangeur thermique.

De préférence, le produit présente la forme d'une brique 2 ou 3 présentant une ou plusieurs parties concaves 5 de forme complémentaire aux tubes à protéger, comme représenté sur la figure 1. Le profil des parties concaves peut être notamment en quart de cercle (brique 2) ou demi-circulaires (brique 3).

Les briques sont empilées en alignement de manière à ce que les parties concaves forment des goulottes dans lesquelles s'étendent lesdits tubes. Elles forment un mur capable de protéger la moitié (briques 2) ou toute (briques 3) la surface extérieure des tubes.

De préférence encore, le produit présente la forme d'une tuile 12, présentant plusieurs parties concaves (2 pour les tuiles représentées sur la figure 2), de préférence de forme complémentaire aux tubes à protéger.

De préférence, la couche de protection recouvre plus de 75%, plus de 80%, plus de 90%, plus de 95%, voire pour plus de 99%, de préférence sensiblement 100% des surfaces (7 ; 9+11 ; 13) des tuiles et des briques exposées aux gaz chauds.

### Exemples

### Méthodes de caractérisation

L'épaisseur moyenne d'une couche de protection en surface d'un produit selon l'invention est mesurée à l'aide d'un microscope optique sur un échantillon poli selon la méthode suivante : le produit est découpé suivant un plan perpendiculaire à la surface vitrifiée. Un échantillon présentant une surface d'un cm² environ est ensuite prélevé et enrobé d'une résine plastique, puis poli. La mesure de l'épaisseur se fait sur le polissage obtenu à l'aide d'un microscope optique Olympus BX60. Un logiciel de traitement d'image, comme Visilog, commercialisé par la société Noésis peut également être utilisé pour évaluer l'épaisseur moyenne de la couche de protection. L'épaisseur moyenne est une moyenne de l'épaisseur mesurée sur 3 prélèvements réalisés aléatoirement à la surface d'une pièce.

La composition de la couche de protection est déterminée par MEB-microsonde avec un faisceau de taille égale à 20 µm, à l'exception du bore, dont le dosage requiert un échantillonnage de ladite couche de protection, qui est ensuite analysé par fluorescence X.

Les phases cristallines présentes dans les produits, ainsi que leur teneur en pourcentage massique, sont déterminées par diffraction des rayons X. On trouve principalement du SiC, SiO₂, des phases SiAlON cristallisées parmi lesquelles du nitrure de silicium Si₃N₄ ainsi que Si₂ON₂.

Le comportement à l'oxydation à hautes températures en présence d'une atmosphère de vapeur d'eau est déterminé selon la norme ASTM C863 - 00, révision 2005, avec les conditions suivantes :
- le four utilisé est un four SR 300-750 de la société GERO,
- les dimensions des échantillons testés sont égales à 220 x 55 x 40 mm³, les échantillons selon l'invention étant mis auxdites dimensions avant l'étape de frittage, de manière à conserver la couche de protection en surface desdits échantillons,
- la température de l'essai est égale à 1000°C,
- la durée de l'essai est égale à 250 heures.

A l'issue de l'essai, la variation de volume (ou « volume change ») ΔV%, exprimée en pourcentage, égale au rapport de la différence du volume de l'échantillon après essai Vₙ et du volume dudit échantillon avant essai Vₒ ramené au volume de l'échantillon avant essai Vₒ,
soit ΔV% = 100.(Vₙ - Vₒ) / Vₒ est déterminée pour chacun des échantillons. Plus la valeur de ΔV% est faible, meilleure est la résistance à l'oxydation de l'échantillon testé.

### Essais

Les exemples suivants, fabriqués selon les étapes a) et c) précédemment décrites, sont fournis à des fins illustratives et ne limitent aucunement l'invention.

Les matières premières introduites dans la charge de départ sont les suivantes :
- du carbure de silicium dit « noir », de différentes fractions granulométriques, vendu par la société Saint-Gobain Ceramics Materials. Il s'agit d'un matériau principalement constitué de la variété SiC alpha et présentant une analyse chimique moyenne, en masse, de 98,5% de SiC,
- une poudre de nitrure de silicium Nitrosil 10, commercialisée par la société Rio Tinto, présentant une teneur en Si₃N₄ supérieure à 65%, et de taille médiane égale à 20 µm,
- de l'argile ferrugineuse Bolus Ton, commercialisée par la société Habelitz, présentant une composition chimique massique de 21% d'alumine, 56% de silice, 11% d'oxyde de fer et une quantité inférieure à 2% d'autres oxydes, ainsi qu'une taille maximale de particules inférieure à 70µm,
- une poudre de carbonate de manganèse, commercialisée par la société Erachem, présentant une teneur massique en manganèse supérieure à 44% et dont 90% en masse des particules sont inférieures à 74 µm,
- du carbure de bore (B₄C), commercialisé par la société Lucky Sound Metals & Chemicals, présentant une teneur massique en B₄C > 94% et une taille maximale de particules inférieure à 50 µm.

Les liants utilisés sont le Lignex MG commercialisé par la société Chemische Werke Zell-Wildshausen GmbH, et du stéarate de calcium commercialisé par la société RCF Chemie & Fraser GmbH.

Les charges de départ réalisées sont résumées dans le tableau 1 suivant :

**Tableau 1**

| Exemple | 1 | 2 |
|---|---|---|
| Matières premières utilisées | | |
| Carbure de silicium | 84,0% | 84,5% |
| Poudre de nitrure de silicium | 10,0% | 10,0% |
| Poudre de carbure de bore | 0,5% | 0,5% |
| Argile ferrugineuse Bolus ton | 3,0% | 3,0% |
| MnCO₃ | 0,5% | - |
| Lignex MG (liant) | 1,8% | 1,8% |
| Stéarate de calcium (liant) | 0,2% | 0,2% |

| Charge de départ | | |
|---|---|---|
| % grains en masse sur la base de la masse de la charge de départ | 73% | 73% |
| % de grains de SiC, en masse sur la base de la masse des grains | 100% | 100% |
| % de fraction matricielle sur la base de la masse de la charge de départ | 25% | 25% |

Chaque charge de départ a été ensuite mise en forme dans un moule métallique, par pressage uniaxial à une pression de 50 MPa, puis démoulée.

Après démoulage, les pièces obtenues ont été séchées à 110°C pendant un temps de 24 heures, puis frittées suivant le cycle suivant :
- Montée à 500°C à une vitesse de 45°C/heure,
- 3 heures à 500°C,
- Montée à 1440°C à une vitesse de 45°C/heure,
- 10 heures à 1440°C,
- Descente à 45°C/heure.

Le produit B obtenu après frittage de la charge de départ selon l'exemple 2 ne présente pas de couche de protection et le produit A obtenu après frittage de la charge de départ selon l'exemple 1 possède en surface une couche de protection vitrifiée présentant les caractéristiques résumées dans le tableau 2 suivant :

**Tableau 2**

| Exemple | A | B |
|---|---|---|
| Charge de départ utilisée | 1 | 2 |

| **Couche de protection** | | |
|---|---|---|
| % de surface du support couverte | 100 | 0 |
| Epaisseur moyenne (µm) | 25 | - |
| %SiO₂ | 66 | - |
| Aluminium exprimée sous la forme Al₂O₃ (%) | 4,6 | - |
| Manganèse exprimé sous la forme MnO (%) | 8 | - |
| Bore exprimé sous la forme B₂O₃ (%) | 0,5 | - |
| Fer exprimé sous la forme Fe₂O₃ (%) | 6 | - |
| Magnésium exprimé sous la forme MgO (%) | 10,1 | - |
| Autres éléments, en dehors de l'oxygène, exprimés sous une forme oxyde (%) | 4,8 | - |

| Support fritté | | |
|---|---|---|
| Granulat en % de la masse du support fritté | 73 | 73 |
| SiC en % de la masse de granulat | 100 | 100 |
| SiO₂ + SiC + SiAlON, en particulier Si₃N₄ et Si₂ON₂, dans la matrice, en % en masse de la matrice | 96 | 95 |

Une comparaison des produits obtenus à partir des charges de départ 1 et 2 montre la présence obligatoire de manganèse pour créer la couche de protection sur la surface du support fritté.

Par ailleurs, des essais ont été effectués pour apprécier le comportement à l'oxydation à hautes températures, en présence d'une atmosphère de vapeur d'eau. Les résultats sont donnés dans le tableau 3 suivant, le produit de l'exemple comparatif étant le REFRAX® PRO, un produit de carbure de silicium à liaison nitrure de silicium :

**Tableau 3**

| Exemple | Comparatif | A |
|---|---|---|
| ΔV% en %, après 250 heures à 1000°C en présence de vapeur d'eau | 0,64 | 0,19 |

On observe que le produit selon l'invention de l'exemple A présente une oxydation 3,36 fois plus faible que celle du produit de l'exemple comparatif. Sa durée de vie en utilisation en sera augmentée.

Bien entendu, l'invention n'est pas limitée aux modes de réalisation décrits, fournis à titre illustratif et non limitatif.

En particulier, un produit fritté selon l'invention peut servir dans d'autres applications que les incinérateurs, par exemple revêtement anti-abrasion ou dans un échangeur thermique.

## Revendications

1. Produit comportant
- un support fritté constitué d'un « granulat » constitué des particules présentant une taille supérieure à 100 µm, le complément dudit support étant la « matrice », et
- une couche de protection recouvrant au moins partiellement la surface dudit support,
le granulat représentant plus de 60% et moins de 95% de la masse dudit support et étant constitué, pour plus de 80%, en masse, de grains de carbure de silicium,
la matrice comportant plus de 3%
- de phase SiAlON cristallisée, ou
- d'un mélange d'un composé de fer et de phase SiAlON cristallisée, le composé de fer pouvant en particulier être choisi parmi FeO, Fe, FeₜSi, avec t compris entre 0,5 et 5,6, Fe₂SiO₄, et leurs mélanges, la teneur en Si₃N₄ étant supérieure à celle dudit composé de fer,
en pourcentage massique sur la base de la masse de la matrice,
la matrice étant constituée, pour plus de 90% en masse,
- de SiO₂ et/ou
- dudit composé de fer et/ou
- de SiC et/ou
- d'une phase SiAlON cristallisée, en particulier Si₃N₄-α et/ou Si₃N₄-β et/ou Si₂ON₂,
la couche de protection étant constituée en un verre ou en une vitrocéramique, et présentant l'analyse chimique suivante, en pourcentage massique sur la base des oxydes :
- 45% ≤ SiO₂ ≤ 90% ;
- 1% ≤ manganèse exprimé sous la forme MnO ≤ 20%, voire MnO ≤ 15% ;
- 2% ≤ aluminium exprimé sous la forme Al₂O₃ ≤15% ;
- autres éléments, en dehors de l'oxygène, exprimés sous une forme oxyde : ≤ 25%,
produit dans lequel ladite phase SiAlON cristallisée respecte l'une des formules suivantes :
- SiₓAl_{y}OᵤNᵥ, dans laquelle :
- x est supérieur ou égal à 0, et inférieur ou égal à 1,
- y est supérieur ou égal à 0, et inférieur ou égal à 1,
- u est supérieur ou égal à 0, et inférieur ou égal à 1,
- v est supérieur à 0, et inférieur ou égal à 1,
- x+y > 0,
x, y, u et v étant des indices stoechiométriques et normalisés par rapport à celui qui est le plus élevé, rendu égal à 1 ;
- MeₓSi₁₂₋₍ₘ₊ₙ₎Al₍ₘ₊ₙ₎OₙN₁₆₋ₙ, avec 0 ≤ x ≤ 2, Me un cation choisi parmi les cations de lanthanides, Fe, Y, Ca, Li et leurs mélanges, 0 ≤ m ≤ 12, 0 ≤ n ≤ 12 et n+m ≤ 12.

2. Produit selon la revendication précédente, dans lequel la matrice comporte plus de 4% et/ou moins de 60% dudit mélange d'un composé de fer et de phase SiAlON cristallisée, en pourcentage massique sur la base de la masse de la matrice.

3. Produit selon l'une quelconque des revendications précédentes, dans lequel la matrice comporte plus de 4% et/ou moins de 60% de phase SiAlON cristallisée, en pourcentage massique sur la base de la masse de la matrice.

4. Produit selon l'une quelconque des revendications précédentes, dans lequel la matrice comporte une phase cristallisée de formule Si_{x"}Al_{y"}O_{u"}N_{v"}, dans laquelle les indices stoechiométriques x", y", u" et v", normalisés par rapport à l'indice le plus élevé rendu égale à 1, sont tels que 0,43 ≤ x" ≤ 0,75 et 0 ≤ y" ≤ 1 et 0 ≤ u" ≤ 1 et 0,9 ≤ v" ≤ 1, dites « SiAlON-β' », et/ou dans lequel la matrice comporte une phase cristallisée de formule Si_{x"'}Al_{y"'}O_{u"'}N_{v"'}, dans laquelle les indices stoechiométriques x'", y'", u'" et v'", normalisés par rapport à l'indice le plus élevé rendu égal à 1, sont tels que x'" = 1 et 0 ≤ y'" ≤ 0,11 et 0,5 ≤ u'" ≤ 0,67 et v" = 1, dites « SiAlON-O' ».

5. Produit selon l'une quelconque des revendications précédentes, dans lequel les grains de carbure de silicium représentent plus de 90% de la masse du granulat, et/ou dans lequel l'ensemble des grains de carbure de silicium et des grains présentant une teneur en alumine supérieure ou égale à 50% représente plus de 95% de la masse du granulat.

6. Produit selon l'une quelconque des revendications précédentes, dans lequel la matrice est constituée, pour plus de 95% en masse,
- de SiO₂ et/ou
- dudit composé de fer et de Si₃N₄, et/ou
- de SiC et/ou
- de SiAlON.

7. Produit selon la revendication précédente, dans lequel le SiAlON de la matrice est choisi parmi Si₃N₄-α, Si₃N₄-β, Si₂ON₂ et leurs mélanges.

8. Produit selon l'une quelconque des revendications précédentes, dans lequel, dans le support, la teneur massique en carbure de silicium, mesurée par diffraction aux rayons X, est supérieure à 70%.

9. Produit selon l'une quelconque des revendications précédentes, dans lequel, dans le support, la teneur massique en nitrure de silicium Si₃N₄ sous forme bêta, mesurée par diffraction aux rayons X, est supérieure à 1% et inférieure à 8%, et/ou la teneur massique en Si₂ON₂, mesurée par diffraction aux rayons X, est supérieure à 1% et inférieure à 7%, et/ou la teneur en phases cristallines autres que SiC, Si₃N₄ sous forme bêta et Si₂ON₂ est inférieure à 6%.

10. Produit selon l'une quelconque des revendications précédentes, dans lequel la couche de protection présente une épaisseur moyenne supérieure à 10 µm et inférieure à 300 µm.

11. Produit selon l'une quelconque des revendications précédentes, dans lequel, dans la couche de protection, la teneur en SiO₂ est supérieure à 50% et inférieure à 85%, et/ou la teneur en manganèse, exprimée sous la forme MnO, est supérieure à 3% et inférieure à 12%, et/ou la teneur en aluminium, exprimée sous la forme Al₂O₃, est supérieure à 3% et inférieure à 10%, et/ou la teneur en bore, exprimée sous la forme B₂O₃, est supérieure à 0,1% et inférieure à 10%, et/ou la teneur en fer, exprimée sous la forme Fe₂O₃, est supérieure à 1% et inférieure à 20%, et/ou la teneur en magnésium, exprimée sous la forme MgO, est comprise entre 5% et 15%, et/ou la teneur en titane, exprimée sous la forme TiO₂ est inférieure à 1%, et/ou la teneur en potassium, exprimée sous la forme K₂O est inférieure à 5%, et/ou la teneur en sodium, exprimée sous la forme Na₂O est inférieure à 4%, et/ou la teneur en calcium, exprimée sous la forme CaO est inférieure à 4%, et/ou les autres éléments que SiO₂, oxygène, manganèse, aluminium, bore, fer, magnésium, titane, potassium, sodium et calcium sont des impuretés et leur teneur est inférieure à 5%.

12. Produit selon l'une quelconque des revendications précédentes, dans lequel la couche de protection comporte du bore et du fer.

13. Produit selon l'une quelconque des revendications précédentes, dans lequel la couche de protection est en une vitrocéramique qui présente des cristallisations contenant les éléments aluminium et/ou potassium et/ou magnésium et/ou calcium et/ou fer et/ou manganèse et/ou silicium et/ou titane et/ou oxygène.

14. Pièce choisie parmi un élément de protection de tubes d'un incinérateur, en particulier une tuile d'incinérateur, et une « belly brick », ladite pièce comportant un produit selon l'une quelconque des revendications précédentes.

15. Procédé de fabrication d'un produit selon l'une quelconque des revendications 1 à 13 comportant un support et une couche de protection, ledit procédé comportant les étapes suivantes :
a) fabrication d'une préforme adaptée à la fabrication, par traitement thermique, dudit support ;
b) optionnellement, application, à la surface de ladite préforme, d'un revêtement adapté à la fabrication, par le frittage de l'étape c), de ladite couche de protection ;
c) frittage de la préforme, optionnellement revêtue, à une température Ts comprise entre 1000 et 1700°C, la température étant maintenue au-delà de 0,9.Ts pendant une durée supérieure à 0,5 heure, de manière à former une pièce frittée ;
d) optionnellement,
d1) application, à la surface de ladite pièce frittée, d'un revêtement adapté à la fabrication, par le traitement thermique de l'étape d2), d'une couche de protection selon l'invention ; et
d2) traitement thermique à une température Ts' comprise entre 700°C et Ts-100°C, la température étant maintenue au-delà de 0,9.Ts' pendant une durée supérieure à 0,5 heure.

16. Procédé de fabrication selon la revendication précédente, dans lequel :
à l'étape a), la fraction matricielle de la préforme comporte
- des particules de nitrure de silicium et/ou
- un mélange de particules dudit composé de fer et/ou de particules de Si₃N₄ et/ou de particules dudit composé de fer et de Si₃N₄, la teneur en composé de fer étant inférieure à celle en Si₃N₄,
- de la silice et/ou un précurseur de silice,
- du manganèse et/ou un précurseur de manganèse,
- de l'aluminium et/ou un précurseur d'aluminium,
- optionnellement du bore et/ou un précurseur de bore,
- optionnellement du fer et/ou un précurseur de fer et il n'y a pas d'étape b), ni d'étape d) ;
et, à l'étape c), le frittage de la préforme est effectué sous atmosphère oxydante.

## Patentansprüche

1. Produkt, umfassend:
- einen gesinterten Träger, bestehend aus einem "Granulat", bestehend aus Partikeln mit einer Größe von mehr als 100 µm, wobei das Komplement des Trägers die "Matrix" ist, und
- eine Schutzschicht, die mindestens teilweise die Oberfläche des Trägers bedeckt,
wobei das Granulat mehr als 60 % und weniger als 95 % der Masse des Trägers darstellt und, für mehr als 80 Massen-%, aus Körnern aus Siliciumcarbid besteht,
wobei die Matrix umfasst mehr als 3 %
- einer kristallisierten SiAlON-Phase, oder
- einer Mischung einer Eisenverbindung und der kristallisierten SiAlON-Phase, wobei die Eisenverbindung insbesondere ausgewählt sein kann aus FeO, Fe, FeₜSi, wobei t zwischen 0,5 und 5,6 beträgt, Fe₂SiO₄, und ihren Mischungen, wobei der Gehalt an Si₃N₄ größer ist als jener der Eisenverbindung,
in Massenprozent auf der Basis der Masse der Matrix, wobei die Matrix, für mehr als 90 Massen-%, besteht aus
- SiO₂ und/oder
- der Eisenverbindung und/oder
- SiC und/oder
- einer kristallisierten SiAlON-Phase, insbesondere Si₃N₄-α und/oder Si₃N₄-β und/oder Si₂ON₂,
wobei die Schutzschicht aus einem Glas oder aus einer Glaskeramik besteht und die folgende chemische Analyse in Massenprozent auf der Basis der Oxide aufweist:
- 45 % ≤ SiO₂ ≤ 90 %;
- 1 % ≤ Mangan, ausgedrückt in der Form MnO ≤ 20 %, sogar MnO ≤ 15 %;
- 2 % ≤ Aluminium, ausgedrückt in der Form Al₂O₃ ≤ 15 %;
- andere Elemente, abgesehen von Oxiden, ausgedrückt in einer Oxidform: ≤ 25 %;
wobei in dem Produkt die kristallisierte SiAlON-Phase eine der folgenden Formeln aufweist:
- SiₓAl_{y}OᵤNᵥ, wobei:
- x größer oder gleich 0 und kleiner oder gleich 1 ist,
- y größer oder gleich 0 und kleiner oder gleich 1 ist,
- u größer oder gleich 0 und kleiner oder gleich 1 ist,
- v größer als 0 und kleiner oder gleich 1 ist,
- x + y > 0,
x, y, u und v stöchiometrische Indices und normalisiert sind in Bezug auf jenen, welcher der höchste ist, gleich 1;
- MeₓSi₁₂₋₍ₘ₊ₙ₎Al₍ₘ₊ₙ₎OₙN₁₆₋ₙ, wobei 0 ≤ x ≤ 2, Me ein Kation ist, ausgewählt aus den Kationen von Lanthaniden, Fe, Y, Ca, Li und ihren Mischungen, 0 ≤ m ≤ 12, 0 ≤ n ≤ 12 und n + m ≤ 12.

2. Produkt nach dem vorhergehenden Anspruch, wobei die Matrix mehr als 4 % und/oder weniger als 60 % der Mischung einer Eisenverbindung und einer kristallisierten SiAlON-Phase umfasst, in Massenprozent auf der Basis der Masse der Matrix.

3. Produkt nach einem der vorhergehenden Ansprüche, wobei die Matrix mehr als 4 % und/oder weniger als 60 % der kristallisierten SiAlON-Phase umfasst, in Massenprozent auf der Basis der Masse der Matrix.

4. Produkt nach einem der vorhergehenden Ansprüche, wobei die Matrix eine kristallisierte Phase mit der Formel Si_{x"}Al_{y"}O_{u"}N_{v"} umfasst, wobei die stöchiometrischen Indices x", y", u" und v", normalisiert in Bezug auf den höchsten Index, gleich 1, derart sind, dass 0,43 ≤ x" ≤ 0,75 und 0 ≤ y" ≤ 1 und 0 ≤ u" ≤ 1 und 0,9 ≤ v" ≤ 1, bezeichnet als "SiAlON-β'", und/oder wobei die Matrix eine kristallisierte Phase mit der Formel Si_{x'"}Al_{y'"}O_{u'"}N_{v"} umfasst, wobei die stöchiometrischen Indices x"', y"', u"' und v"', normalisiert in Bezug auf den höchsten Index, gleich 1, derart sind, dass x'" = 1 und 0 ≤ y"' ≤ 0,11 und 0,5 ≤ u'" ≤ 0,67 und v" = 1, bezeichnet als "SiAlON-O'".

5. Produkt nach einem der vorhergehenden Ansprüche, wobei die Körner aus Siliciumcarbid mehr als 90 % der Masse des Granulats darstellen, und/oder wobei die Gesamtheit der Körner aus Siliciumcarbid und der Körner mit einem Gehalt an Aluminium größer oder gleich 50 % mehr als 95 % der Masse des Granulats darstellt.

6. Produkt nach einem der vorhergehenden Ansprüche, wobei die Matrix, für mehr als 95 Massen-%, besteht aus
- SiO₂ und/oder
- der Eisenverbindung und Si₃N₄ und/oder
- SiC und/oder
- SiAlON.

7. Produkt nach dem vorhergehenden Anspruch, wobei das SiAlON der Matrix ausgewählt ist aus Si₃N₄-α, Si₃N₄-β, Si₂ON₂ und ihren Mischungen.

8. Produkt nach einem der vorhergehenden Ansprüche, wobei, in dem Träger, der Massengehalt an Siliciumcarbid, gemessen durch Röntgenbeugung, größer ist als 70 %.

9. Produkt nach einem der vorhergehenden Ansprüche, wobei, in dem Träger, der Massengehalt an Siliciumnitrid Si₃N₄ in der beta-Form, gemessen durch Röntgenbeugung, größer als 1 % und kleiner als 8 % ist, und/oder der Massengehalt an Si₂ON₂, gemessen durch Röntgenbeugung, größer als 1 % und kleiner als 7 % ist, und/oder der Gehalt an anderen kristallinen Phasen als SiC, Si₃N₄ in der beta-Form und Si₂ON₂ kleiner ist als 6 %.

10. Produkt nach einem der vorhergehenden Ansprüche, wobei die Schutzschicht eine mittlere Dicke von mehr als 10 µm und weniger als 300 µm aufweist.

11. Produkt nach einem der vorhergehenden Ansprüche, wobei, in der Schutzschicht, der Gehalt an SiO₂ größer als 50 % und kleiner als 85 % ist, und/oder der Gehalt an Mangan, ausgedrückt in der Form MnO, größer als 3 % und kleiner als 12 % ist, und/oder der Gehalt an Aluminium, ausgedrückt in der Form Al₂O₃, größer als 3 % und kleiner als 10 % ist, und/oder der Gehalt an Bor, ausgedrückt in der Form B₂O₃, größer als 0,1 % und kleiner als 10 % ist, und/oder der Gehalt an Eisen, ausgedrückt in der Form Fe₂O₃, größer als 1 % und kleiner als 20 % ist, und/oder der Gehalt an Magnesium, ausgedrückt in der Form MgO, zwischen 5 % und 15 % beträgt, und/oder der Gehalt an Titan, ausgedrückt in der Form TiO₂, kleiner als 1 % ist, und/oder der Gehalt an Kalium, ausgedrückt in der Form K₂O, kleiner ist als 5 %, und/oder der Gehalt an Natrium, ausgedrückt in der Form Na₂O, kleiner ist als 4 %, und/oder der Gehalt an Calcium, ausgedrückt in der Form CaO, kleiner ist als 4 %, und/oder die anderen Elemente als SiO₂, Sauerstoff, Mangan, Aluminium, Bor, Eisen, Magnesium, Titan, Kalium, Natrium und Calcium Verunreinigungen sind und ihr Gehalt kleiner als 5 % ist.

12. Produkt nach einem der vorhergehenden Ansprüche, wobei die Schutzschicht Bor und Eisen umfasst.

13. Produkt nach einem der vorhergehenden Ansprüche, wobei die Schutzschicht aus Glaskeramik ist, die Kristallisationen aufweist, enthaltend die Elemente Aluminium und/oder Kalium und/oder Magnesium und/oder Calcium und/oder Eisen und/oder Mangan und/oder Silicium und/oder Titan und/oder Sauerstoff.

14. Stück, welches aus einem Schutzelement von Rohren einer Verbrennungsanlage, insbesondere einem Ziegel einer Verbrennungsanlage, und einem "Belly Brick" ausgewählt ist, wobei das Stück ein Produkt nach einem der vorhergehenden Ansprüche umfasst.

15. Verfahren zur Herstellung eines Produkts nach einem der Ansprüche 1 bis 13, umfassend einen Träger und eine Schutzschicht, wobei das Verfahren die folgenden Schritte umfasst:
a) Herstellen einer Vorform, die für die Herstellung des Trägers durch eine Wärmebehandlung geeignet ist;
b) gegebenenfalls Aufbringen einer Beschichtung, die zur Herstellung der Schutzschicht durch das Sintern von Schritt c) geeignet ist, auf die Oberfläche der Vorform;
c) Sintern der gegebenenfalls beschichteten Vorform bei einer Temperatur Ts zwischen 1000 und 1700 °C, wobei die Temperatur über 0,9.Ts während einer Dauer von mehr als 0,5 Stunden aufrechterhalten wird, um ein gesintertes Stück zu bilden;
d) gegebenenfalls
d1) Aufbringen einer Beschichtung, die zur Herstellung einer Schutzschicht gemäß der Erfindung durch die Wärmebehandlung von Schritt d2) geeignet ist, auf die Fläche des gesinterten Stücks; und
d2) Wärmebehandeln bei einer Temperatur Ts' zwischen 700 °C und Ts-100 °C, wobei die Temperatur über 0,9.Ts' während einer Dauer von mehr als 0,5 Stunden aufrechterhalten wird.

16. Herstellungsverfahren nach dem vorhergehenden Anspruch, wobei:
in Schritt a) die Matrixfraktion der Vorform umfasst
- Partikel aus Siliciumnitrid und/oder
- eine Mischung von Partikeln der Eisenverbindung und/oder von Partikeln aus Si₃N₄ und/oder von Partikeln der Eisenverbindung und von Si₃N₄, wobei der Gehalt an der Eisenverbindung kleiner ist als jener an Si₃N₄,
- Siliciumdioxid und/oder einen Vorläufer von Siliciumdioxid,
- Mangan und/oder einen Vorläufer von Mangan,
- Aluminium und/oder einen Vorläufer von Aluminium,
- gegebenenfalls Bor und/oder einen Vorläufer von Bor,
- gegebenenfalls Eisen und/oder einen Vorläufer von Eisen,
und es weder einen Schritt b) noch einen Schritt d) gibt;
und in Schritt c) das Sintern der Vorform unter einer oxidierenden Atmosphäre durchgeführt wird.

## Claims

1. Product comprising:
- a sintered support consisting of an "aggregate" consisting of particles having a size of greater than 100 µm, the balance of said support being the "matrix", and
- a protective layer at least partially covering the surface of said support,
the aggregate representing more than 60% and less than 95% of the weight of said support and being more than 80% constituted, by weight, of silicon carbide grains, the matrix comprising more than 3%
- of crystalline SiAlON phase, or
- of a mixture of an iron compound and of crystalline SiAlON phase, the iron compound being able in particular to be chosen from FeO, Fe, FeₜSi, with t between 0.5 and 5.6, Fe₂SiO₄, and mixtures thereof, the content of Si₃N₄ being greater than that of said iron compound,
as percentages by weight on the basis of the weight of the matrix,
the matrix being more than 90% by weight constituted of:
- of SiO₂ and/or
- of said iron compound and/or
- of SiC and/or
- of a crystalline SiAlON phase, in particular Si₃N₄₋α and/or Si₃N₄₋β and/or Si₂ON₂,
the protective layer being constituted of a glass or of a glass-ceramic, and having the following chemical analysis, as percentages by weight on the basis of the oxides:
- 45% ≤ SiO₂ ≤ 90%;
- 1% ≤ manganese expressed in the form MnO ≤ 20%, or even MnO ≤ 15%;
- 2% ≤ aluminium expressed in the form Al₂O₃ ≤ 15%;
- other elements, apart from oxygen, expressed in an oxide form: ≤ 25%,
in which product said crystalline SiAlON phase complies with one of the following formulae:
- SiₓAl_{y}OᵤNᵥ, in which:
- x is greater than or equal to 0, and less than or equal to 1,
- y is greater than or equal to 0, and less than or equal to 1,
- u is greater than or equal to 0, and less than or equal to 1,
- v is greater than 0, and less than or equal to 1,
- x+y > 0,
x, y, u and v being stoichiometric indices, normalized relative to the highest index, which is rendered equal to 1;
- MeₓSi₁₂₋₍ₘ₊ₙ₎Al₍ₘ₊ₙ₎OₙN₁₆₋ₙ, with 0 ≤ x ≤ 2, Me being a cation chosen from the cations of lanthanides, Fe, Y, Ca, Li and mixtures thereof, 0 ≤ m ≤ 12, 0 ≤ n ≤ 12 and n+m ≤ 12.

2. Product according to the preceding claim, wherein the matrix comprises more than 4% and/or less than 60% of said mixture of an iron compound and of crystalline SiAlON phase, as percentages by weight on the basis of the weight of the matrix.

3. Product according to either one of the preceding claims, wherein the matrix comprises more than 4% and/or less than 60% of crystalline SiAlON phase, as percentages by weight on the basis of the weight of the matrix.

4. Product according to any one of the preceding claims, wherein the matrix comprises a crystalline phase of formula Si_{x"}Al_{y"}O_{u"}N_{v"}, wherein the stoichiometric indices x", y", u" and v", standardized relative to the highest index which is rendered equal to 1, are such that 0.43 ≤ x" ≤ 0.75 and 0 ≤ y" ≤ 1 and 0 ≤ u" ≤ 1 and 0.9 ≤ v" ≤ 1 , referred to as "SiAlON-β'", and/or wherein the matrix comprises a crystalline phase of formula Si_{x'"}Al_{y'"}O_{u'"}N_{v'"}, wherein the stoichiometric indices x"', y"', u'" and v'", standardized relative to the highest index which is rendered equal to 1, are such that x'" = 1 and 0 ≤ y"' ≤ 0.11 and 0.5 ≤ u'" ≤ 0.67 and v'" = 1 , referred to as "SiAlON-O"'.

5. Product according to any one of the preceding claims, wherein the silicon carbide grains represent more than 90% of the weight of the aggregate, and/or wherein all of the silicon carbide grains and grains having an alumina content of greater than or equal to 50% represent more than 95% of the weight of the aggregate.

6. Product according to any one of the preceding claims, wherein the matrix is more than 95% by weight constituted
- of SiO₂ and/or
- of said iron compound and of Si₃N₄, and/or
- of SiC and/or
- of SiAlON.

7. Product according to the preceding claim, wherein the SiAlON of the matrix is chosen from Si₃N₄₋α, Si₃N₄₋β, Si₂ON₂ and mixtures thereof.

8. Product according to any one of the preceding claims, wherein, in the support, the weight content of silicon carbide, measured by x-ray diffraction, is greater than 70%.

9. Product according to any one of the preceding claims, wherein, in the support, the weight content of silicon nitride Si₃N₄ in beta form, measured by x-ray diffraction, is greater than 1% and less than 8%, and/or the weight content of Si₂ON₂, measured by x-ray diffraction, is greater than 1% and less than 7%, and/or the content of crystalline phases other than SiC, Si₃N₄ in beta form and Si₂ON₂ is less than 6%.

10. Product according to any one of the preceding claims, wherein the protective layer has a mean thickness of greater than 10 µm and less than 300 µm.

11. Product according to any one of the preceding claims, wherein, in the protective layer, the content of SiO₂ is greater than 50% and less than 85%, and/or the content of manganese, expressed in the form MnO, is greater than 3% and less than 12%, and/or the content of aluminium, expressed in the form Al₂O₃, is greater than 3% and less than 10%, and/or the content of boron, expressed in the form B₂O₃, is greater than 0.1% and less than 10%, and/or the content of iron, expressed in the form Fe₂O₃, is greater than 1% and less than 20%, and/or the content of magnesium, expressed in the form MgO, is between 5% and 15%, and/or the content of titanium, expressed in the form TiO₂ is less than 1%, and/or the content of potassium, expressed in the form K₂O is less than 5%, and/or the content of sodium, expressed in the form Na₂O is less than 4%, and/or the content of calcium, expressed in the form CaO is less than 4%, and/or the elements other than SiO₂, oxygen, manganese, aluminium, boron, iron, magnesium, titanium, potassium, sodium and calcium are impurities and the content thereof is less than 5%.

12. Product according to any one of the preceding claims, wherein the protective layer comprises boron and iron.

13. Product according to any one of the preceding claims, wherein the protective layer is made of a glass-ceramic which has crystallizations containing the elements aluminium and/or potassium and/or magnesium and/or calcium and/or iron and/or manganese and/or silicon and/or titanium and/or oxygen.

14. Part chosen from an element for protecting tubes of an incinerator, in particular an incinerator tile, and a "belly brick", said part comprising a product according to any one of the preceding claims.

15. Process for manufacturing a product according to any one of Claims 1 to 13 comprising a support and a protective layer, said process comprising the following steps:
a) manufacturing a preform suitable for the manufacture, by heat treatment, of said support;
b) optionally, applying, to the surface of said preform, a coating suitable for the manufacture, by the sintering of step c), of said protective layer;
c) sintering the optionally coated preform at a temperature Ts of between 1000°C and 1700°C, the temperature being maintained above 0.9.Ts for a duration of greater than 0.5 hour, so as to form a sintered part;
d) optionally,
d1) applying, to the surface of said sintered part, a coating suitable for the manufacture, by the heat treatment of step d2), of a protective layer according to the invention; and
d2) heat treatment at a temperature Ts' of between 700°C and Ts-100°C, the temperature being maintained above 0.9.Ts' for a duration of greater than 0.5 hour.

16. Manufacturing process according to the preceding claim, wherein:
in step a), the matrix fraction of the preform comprises
- particles of silicon nitride and/or
- a mixture of particles of said iron compound and/or of particles of Si₃N₄ and/or of particles of said iron compound and of Si₃N₄, the content of iron compound being less than that of Si₃N₄,
- silica and/or a silica precursor,
- manganese and/or a manganese precursor,
- aluminium and/or an aluminium precursor,
- optionally boron and/or a boron precursor,
- optionally iron and/or an iron precursor
and there is no step b), or step d);
and, in step c), the sintering of the preform is carried out under an oxidizing atmosphere.
